# EUROPEAN PATENT SPECIFICATION

(11) **EP 4 336 624 B1**
(45) Date of publication and mention of the grant of the patent: **20.11.2024**
(21) Application number: 22194249.3
(22) Date of filing: 06.09.2022
(51) Int. Cl.: H01M 10/613, H01M 10/625, H01M 10/647, H01M 10/653, H01M 10/6553, H01M 10/6556, H01M 10/6567, H01M 50/505, H01M 50/522, H01M 50/553, H01M 50/55, H01M 50/557, H01M 50/562

(54) **BATTERY ASSEMBLY, ELECTRIC BATTERY CELL, AND VEHICLE**
BATTERIEANORDNUNG, ELEKTRISCHE BATTERIEZELLE UND FAHRZEUG
ENSEMBLE BATTERIE, ÉLÉMENT DE BATTERIE ÉLECTRIQUE ET VÉHICULE

(43) Date of publication of application: 13.03.2024
(73) Proprietor: Volvo Car Corporation, 405 31 Göteborg (SE)
(72) Inventor: AMATO, Leonardo, 40531 Göteborg (SE); VIZZINI, Simone, 40531 Göteborg (SE)
(74) Representative: Maiwald GmbH

(56) References cited:
- US-A1- 2013 280 574
- US-A1- 2018 191 041
- US-A1- 2021 305 639

## Description

The present disclosure relates to a battery assembly comprising at least one electric battery cell and at least one coolant channel being configured to guide a coolant. The at least one electric battery cell comprises at least a first electrode being electrically connected to a first cell terminal and a second electrode being electrically connected to a second cell terminal. Each of the first cell terminal and the second cell terminal comprises an electric connection surface for electrically connecting the respective first cell terminal or second cell terminal.

The present disclosure is additionally directed to an electric battery cell for such a battery assembly.

The present disclosure is also directed to a vehicle comprising a battery assembly.

A coolant being guided in the coolant channel may be used to heat or cool the battery cells of the battery assembly. If the coolant is used for cooling, heat from the battery cells is transferred into the coolant. If the coolant is used for heating, heat from the coolant is transferred into the battery cells. Cooling and heating of battery cells may be summarized as thermal management of battery cells. This is necessary in order to be able to provide a desired electrical performance of the battery cells.

An electric battery cell according to the preamble of claim 1 is known from US 2013/0280574 A1.

It is an objective of the present disclosure to further improve the thermal management of battery cells.

The problem is at least partially solved or alleviated by the subject matter of the independent claims of the present disclosure, wherein further examples are incorporated in the dependent claims.

According to a first aspect, there is provided an electric battery cell for a battery assembly. The electric battery cell comprises at least a first electrode being electrically connected to a first cell terminal and a second electrode being electrically connected to a second cell terminal. Each of the first cell terminal and the second cell terminal comprises an electric connection surface for electrically connecting the respective first cell terminal or second cell terminal. Moreover, at least one of the first cell terminal and the second cell terminal comprises a thermal connection surface being separate from the respective electric connection surface. The thermal connection surface is configured to transfer heat. Again, the fact that the thermal connection surface is separate from the respective electric connection surface means that the thermal connection surface and the respective electric connection surface are overlap-free. Thus, different surfaces of the respective first cell terminal or second cell terminal are used for the electric connection and the thermal connection. Consequently, the active parts of the battery cell, i.e. the electrodes and the electrolyte, may be heated or cooled via the thermal connection surface in a direct manner. This applies in a geometric sense, since the thermal connection surface is geometrically arranged very close to the electrodes and the electrolyte. Moreover, this applies in a thermal sense since only a comparatively little thermal resistance exists between the thermal connection surface and the active parts of the battery cell. This renders the cooling or heating of the battery cell very efficient. This means that comparatively little energy is required in order to achieve a pre-defined cooling effect or heating effect.

According to present disclosure, the electric connection surface and the thermal connection surface of at least one of the first cell terminal and the second cell terminal are arranged on adjacent sides of the respective first cell terminal or second cell terminal. In this context, adjacent sides of cell terminals are to be understood as sides of a cell terminal that share a common edge. An angle between such sides is for example 90°. In this configuration, the electric connection surface and the thermal connection surface may be arranged in a very compact manner.

If such an electric battery cell is used in a battery assembly, e.g. a battery assembly according to the present disclosure, an electric conductor or bus bar may be connected to the electric connection surface and a coolant channel may be thermally coupled to the thermal connection surface. In such a configuration, the electric conductor may at least partially extend over the coolant channel. Alternatively, the coolant channel may extend at least partially over the electric conductor.

According to the present disclosure, the electric connection surface and the thermal connection surface of at least one of the first cell terminal and the second cell terminal are arranged on opposite sides of the respective first cell terminal or second cell terminal. Also in this example, the electric connection surface and the thermal connection surface are arranged in a compact manner. Additionally, this configuration allows to provide a comparatively big electric connection surface and a comparatively big thermal connection surface on a given cell terminal.

If such an electric battery cell is used in a battery assembly, e.g. a battery assembly according to the present disclosure, an electric conductor may be electrically connected to the electric connection surface and a coolant channel may be thermally coupled to the thermal connection surface. Consequently, the electric conductor and the coolant channel are connected to opposite sides of the respective first cell terminal or second cell terminal. Such a configuration is comparatively compact.

electric battery cell according to the present disclosure is an electric battery cell for a vehicle, especially for propelling a vehicle.

each of the first cell terminal and the second cell terminal comprises a thermal connection surface being configured to transfer heat. Consequently, the battery cell may be heated or cooled via both the first cell terminal and the second cell terminal. In doing so, the cooling performance or heating performance may be enhanced.

When forming part of a battery assembly, the thermal connection surface of the first cell terminal and the thermal connection surface of the second cell terminal may be thermally coupled to the same coolant channel. Alternatively, the thermal connection surface of the first cell terminal and the thermal connection surface of the second cell terminal may be thermally coupled two different coolant channels. In this context, a first coolant channel may be thermally coupled to a first group of cell terminals and a second coolant channel may be thermally coupled to a second group of cell terminals.

In an example, at least one of the first cell terminal and the second cell terminal is tab-shaped or pin-shaped. Cell terminals being tab-shaped or pin-shaped are known as such. In the present context, such a cell terminal has an electric connection surface and a thermal connection surface. Both pin-shaped terminals and tab-shaped terminals offer the possibility to arrange the electric connection surface and the thermal connection surface in a compact manner.

In an example, the electric connection surface and the thermal connection surface of at least one of the first cell terminal and the second cell terminal are arranged on the same side of the respective first cell terminal or second cell terminal. In this context, an edge of the electric connection surface and an edge of the thermal connection surface may contact each other. Alternatively, a gap is provided between the electric connection surface and the thermal connection surface. Arranging the electric connection surface and the thermal connection surface on the same side of the respective first cell terminal or second cell terminal has the advantage that both the electric connection surface and the thermal connection surface are accessible from the same side. This facilitates the assembly of the battery cells within a battery assembly.

In an example, at least one of the first cell terminal and the second cell terminal comprises two or more thermal connection surfaces being separate from one another. Consequently, a comparatively big total thermal connection surface may be provided. This enhances the cooling performance or the heating performance via the total of the thermal connection surfaces. In an example, the electric connection surface may be arranged between two thermal connection surfaces.

In an example, a thermal interface material may be arranged on at least one thermal connection surface. A thermal conductivity of the thermal interface material exceeds the thermal conductivity of the first cell terminal or the second cell terminal comprising the thermal connection surface on which the thermal interface material is arranged. Using a thermal interface material enhances the thermal conductivity of thermal connection surface. Consequently, heat transfer over the thermal connection surface is facilitated. In an example, the thermal interface material is a solder material.

In a case in which the electric battery cell is used in a battery assembly, e.g. a battery assembly according to the present disclosure, the coolant channel may be connected to the thermal connection surface via the thermal interface material. In other words, the thermal interface material is interposed between the thermal connection surface and the coolant channel. This leads to a comparatively low thermal resistance between the interior of the coolant channel and the thermal connection surface.

In an example, a ceramic spacer part is positioned on at least one thermal connection surface. An electric conductivity of the first cell terminal or the second cell terminal on which the ceramic spacer is positioned is at least double the electric conductivity of the ceramic spacer part. In other words, the ceramic spacer part is an electric isolator. Thus, the ceramic spacer part helps to electrically isolate components which are to be coupled to the thermal connection surface.

In a case in which the electric battery cell is used in a battery assembly, e.g. a battery assembly according to the present disclosure, the ceramic spacer part may be interposed between the thermal connection surface and the coolant channel.

It is noted, that a thermal conductivity of the ceramic spacer part may be comparatively high. For example, the thermal conductivity of the ceramic spacer part may be at least double the thermal conductivity of the first cell terminal or the second cell terminal on which the ceramic spacer is positioned. Consequently, the ceramic spacer part may facilitate the heat exchange with the thermal connection surface.

It is further noted, that the thermal interface material and the ceramic spacer part may be used in combination. In this context, the thermal interface material is arranged between the thermal connection surface and the ceramic spacer part. The thermal interface material may additionally be used in order to mechanically connect the ceramic spacer part to the thermal connection surface. Thus, if the electric battery cell is used in a battery assembly, e.g. a battery assembly according to the present disclosure, the thermal interface material and the ceramic spacer part are arranged between the coolant channel and the thermal connection surface.

In an example, the ceramic spacer part comprises an aluminum nitride material or a silicon nitride material. These materials offer a good combination of a comparatively low electric conductivity and a comparatively high thermal conductivity. In simplified words, these materials are electric isolators and thermal conductors.

According to a second aspect, there is provided a battery assembly comprising at least one electric battery cell and at least one coolant channel being configured to guide a coolant. The at least one electric battery cell comprises at least a first electrode being electrically connected to a first cell terminal and a second electrode being electrically connected to a second cell terminal. Each of the first cell terminal and the second cell terminal comprises an electric connection surface for electrically connecting the respective first cell terminal or second cell terminal. Moreover, at least one of the first cell terminal and the second cell terminal comprises a thermal connection surface being separate from the respective electric connection surface. The coolant channel is thermally coupled to the thermal connection surface of the at least one electric battery cell. In the present context, the fact that the thermal connection surface is separate from the respective electric connection surface means that the thermal connection surface and the respective electric connection surface are overlap-free. At the same time, the thermal connection surface is arranged on at least one of the first connection terminal and the second connection terminal. Consequently, the coolant flowing in the coolant channel is able to cool or heat the active parts of the battery cell, i.e. the electrodes and the electrolyte, in a direct manner. This applies in a geometric sense, since the thermal connection surface is geometrically arranged very close to the electrodes and the electrolyte. Moreover, this applies in a thermal sense since only a comparatively little thermal resistance exists between the thermal connection surface and the active parts of the battery cell. This renders the cooling or heating of the battery cell very efficient. This means that comparatively little energy is required in order to achieve a pre-defined cooling effect or heating effect.

In an example, the battery assembly is a battery assembly for a vehicle, especially for propelling a vehicle. In this context, the battery assembly may be called a traction battery assembly.

In an example, the battery cells of the battery assembly are prismatic battery cells.

The electrodes and the electrolyte may be called a jellyroll or jelly stack.

In an example, the coolant channel is made from a plastic material. Consequently, the coolant channel may be designed in a lightweight manner. Additionally, a geometry of such a coolant channel may be chosen in a comparatively free manner. Thus, the geometry of the coolant channel may be easily adapted to given spaces in a given application. In other words, the coolant channel may be designed in a compact manner.

In an example, the plastic material is a polyamide material, especially a polyamide 6 material.

The plastic material may have a thermal conductivity of 3 W/(m K) to 5 W/(m K), preferably 3,5 W/(m K) to 4,5 W/(m K), in a flow direction. In an example, the plastic material has a thermal conductivity of 3,8 W/(m K) in the flow direction.

The plastic material may have a thermal conductivity of 3 W/(m K) to 5 W/(m K), preferably 3,5 W/(m K) to 4,5 W/(m K), in a crossflow direction. In an example, the plastic material has a thermal conductivity of 3,7 W/(m K) in the crossflow direction.

The plastic material may have a thermal conductivity of 0,5 W/(m K) to 2 W/(m K), preferably 1 W/(m K) to 1,5 W/(m K), in a through plane direction. In an example, the plastic material has a thermal conductivity of 1,3 W/(m K) in the through plane direction.

The plastic material may have a dielectric constant of 2,5 to 4,5, preferably 3 to 4, at a frequency of 1 MHz. In an example, the plastic material has a dielectric constant of 3,6.

In an example, the battery assembly comprises at least two electric battery cells. The coolant channel is thermally coupled to the thermal connection surfaces of all of the at least two electric battery cells. Thus, one coolant channel may be used in order to cool or heat a plurality of battery cells. This renders the battery assembly structurally simple and compact.

In an example, the at least two electric battery cells are electrically connected by an electric conductor electrically connecting an electric connection surface of each of the at least two electric battery cells. The electric conductor and the coolant channel are formed integrally. In this context, the electric conductor may also be called a bus bar. By forming the bus bar integrally with the coolant channel, the battery assembly is very compact. Additionally, the assembly of the battery assembly is facilitated since the electric conductor and the coolant channel may be assembled to the battery cells in one step.

In an example, the battery assembly further comprises a cooling means being arranged on a side adjacent or opposite to the side of the at least one electric battery cell carrying the respective first and second electric cell terminal. It is emphasized that this cooling means is separate from the coolant channel as mentioned above. This means that the coolant channel does not form part of the cooling means. The location of the cooling means may also be referred to as outside a cell can. The cooling means for example comprises a cooling plate, i.e. a plate comprising a coolant channel. If such a plate is arranged on a side of a battery cell and if coolant flows through the coolant channels of the plate, the battery cell may be heated or cooled. Consequently, the cooling means may be used to additionally cool or heat the battery cells.

According to a third aspect, there is provided a vehicle comprising a battery assembly according to the present disclosure. This means, that the vehicle also comprises at least one electric battery cell according to the disclosure. The battery assembly and the at least one electric battery cell may be used for propelling the vehicle. Since the cooling or heating of the at least one electric battery cell and the battery assembly is very efficient, the vehicle may be operated in a very efficient manner. Consequently, the vehicle may have a comparatively high driving range.

These and other aspects of the present disclosure will become apparent from and elucidated with reference to the examples described hereinafter.

Examples of the disclosure will be described in the following with reference to the following drawings.
- Figure 1: shows a battery assembly according to the present disclosure, wherein the battery assembly comprises a plurality of electric battery cells according to the present disclosure,
- Figure 2: shows a sectional view of the battery assembly of Figure 1 along plane II in Figure 1,
- Figure 3: shows an alternative battery assembly according to the present disclosure comprising an alternative electric battery cell according to the present disclosure in a view corresponding to Figure 2,
- Figure 4: shows a further alternative battery assembly according to the present disclosure comprising an alternative electric battery cell according to the present disclosure in a view corresponding to Figure 2,
- Figure 5: shows another alternative battery assembly according to the present disclosure comprising an alternative electric battery cell according to the present disclosure in a view corresponding to Figure 2,
- Figure 6: shows an additional alternative battery assembly according to the present disclosure comprising an alternative electric battery cell according to the present disclosure in a view corresponding to Figure 2, and
- Figure 7: shows an electric battery cell of the battery assembly of Figure 1 in an isolated perspective representation.

The Figures are merely schematic representations and serve only to illustrate examples of the disclosure. Identical or equivalent elements are in principle provided with the same reference signs.

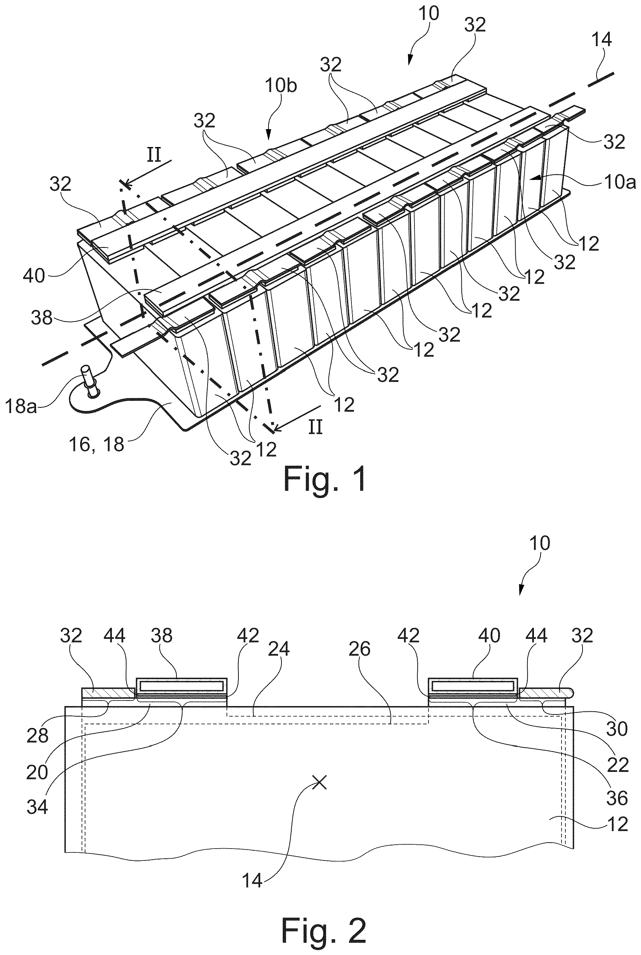

Figure 1 show a battery assembly 10.

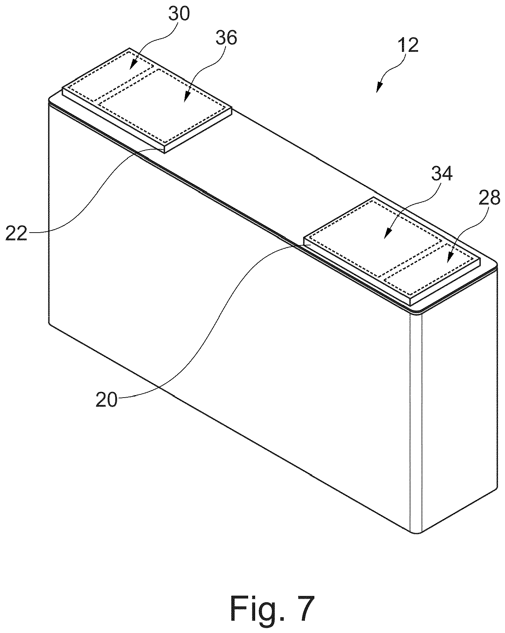

The battery assembly 10 comprises a total of twelve identical electric battery cells 12 (see also Figure 7).

The electric battery cells 12 are arranged side-by-side along a line-up direction 14.

Furthermore, all electric battery cells 12 are placed on a cooling means 16 which has the form of a cooling plate 18. The cooling plate 18 comprises a network of internal coolant channels which can be supplied with coolant via a coolant port 18a.

The cooling plate 18 is arranged on a bottom side of each of the battery cells 12. In other words, all battery cells 12 are located on top of the cooling plate 18.

It is noted that in the examples shown in the Figures, the cooling means 16, i.e. the cooling plate 18, is optional. The battery cells 12 may be sufficiently cooled via the respective thermal connection surfaces which are arranged on the cell terminals of each battery cell 12 as will be explained below.

On a respective upper side, each of the battery cells 12 comprises a first cell terminal 20 and a second cell terminal 22.

The first cell terminal 20 is electrically connected to an electrode 24. It is understood, that the first cell terminal 20 may also be electrically connected to a plurality of first electrodes. In the representation of Figure 1, the first electrode 24 is representative of this plurality of electrodes.

The second cell terminal 22 is electrically connected to an electrode 26. It is understood, that the second cell terminal 22 may also be electrically connected to a plurality of second electrodes. In the representation of Figure 1, the second electrode 26 is representative of this plurality of electrodes.

In an example, the first cell terminal 20 is a negative terminal which may also be referred to as the minus pole of the electric battery cell 12. Then, the first electrodes 24 are anodes. The second cell terminal 22 is a positive terminal which may also be referred to as the plus pole of the electric battery cell 12. The second electrodes 26 are cathodes.

In the example shown in the Figures, the first cell terminal 20 and the second cell terminal 22 are tab-shaped (see especially Figures 1, 2 and 7). It is understood that also cell terminals 20, 22 of other shapes are possible, especially pin-shaped cell terminals 20, 22.

The first cell terminal 20 comprises an electric connection surface 28.

The second cell terminal 22 comprises an electrical connection surface 30.

Within the battery assembly 10, the electric battery cells 12 are connected in series.

To this end, the electric battery cells 12 are arranged in alternating orientations and neighboring first cell terminals 20 and second cell terminals 22 of neighboring electric battery cells 12 are electrically connected via an electric conductor 32 respectively. The electric conductor 32 may also be designated a bus bar. The electric conductors 32 also form part of the battery assembly 10.

Even though the battery assembly 10 comprises a total of twelve electric battery cells 12 and a total of thirteen electric conductors 32, the following explanations will be focused on one single electric battery cell 12 and its connections (cf. Figure 2).

One of the electric conductors 32 is electrically connected to the electric connection surface 28 and the electric connection surface 30 respectively, e.g. by spot welding.

Beyond that, each of the first cell terminal 20 and the second cell terminal 22 comprises a thermal connection surface. In this context, the thermal connection surface of the first cell terminal 20 is designated with reference sign 34 and the thermal connection surface of the second cell terminal 22 is designated with reference sign 36.

It has to be noted that the thermal connection surface 34 of the first cell terminal 20 is separate from the electric connection surface 28 of the first cell terminal 20. This means that the thermal connection surface 34 and the electric connection surface 28 do not overlap.

Also the thermal connection surface 36 of the second cell terminal 22 is separate from the electric connection surface 30 of the second cell terminal 22. This means that the thermal connection surface 36 and the electric connection surface 30 do not overlap.

The battery assembly 10 also comprises two coolant channels 38, 40.

Coolant channel 38 is arranged adjacent to a first end 10a of the upper side of the electric battery cells 12. Moreover, coolant channel 38 is thermally coupled to all the thermal connection surfaces 34, 36 which are arranged proximate to the first end 10a.

Coolant channel 40 is arranged adjacent to a second end 10b of the upper side of the electric battery cells 12. The second end 10b is opposed to the first end 10a. Coolant channel 40 is thermally coupled to all the thermal connection surfaces 34, 36 which are arranged proximate to the second end 10b.

The coolant channels 38, 40 are both configured to guide a coolant and are arranged substantially parallel.

Both coolant channels 38, 40 are made from plastic material.

The coolant channels 38, 40 do not directly abut against the respective thermal connection surface 34, 36. Rather, on each of the thermal connection surfaces 34, 36 a thermal interface material 42 is provided.

The objective of using the thermal interface material 42 is to enhance the thermal conductivity of the thermal connection surfaces 34, 36. The thermal interface material 42 has a thermal conductivity which exceeds the thermal conductivity of the first cell terminal 20 and the second cell terminal 22.

Moreover, a ceramic spacer part 44 is interposed between each of the thermal connection surfaces 34, 36 and the respective coolant channel 38, 40.

The objective of using such a ceramic spacer part 44 is to electrically isolate the coolant channels 38, 40 from the first cell terminal 20 and the second cell terminal 22 respectively. At the same time, thermal conductivity shall not be hindered. Therefore, an electric conductivity of the first cell terminal 20 and the second cell terminal 22 is at least double the electric conductivity of the ceramic spacer part 44.

In the present example, the ceramic spacer part 44 comprises an aluminum nitride material or a silicon nitride material.

The thermal interface material 42 is a solder material. It is additionally used to mechanically join the ceramic spacer part 44 on the respective thermal connection surface 34, 36. Furthermore, the ceramic spacer part 44 may be connected to the respective coolant channel 38, 40 by soldering.

It is noted that in the Figures the thickness of the thermal interface material 42 and the ceramic spacer part 44 is artificially increased with respect to reality.

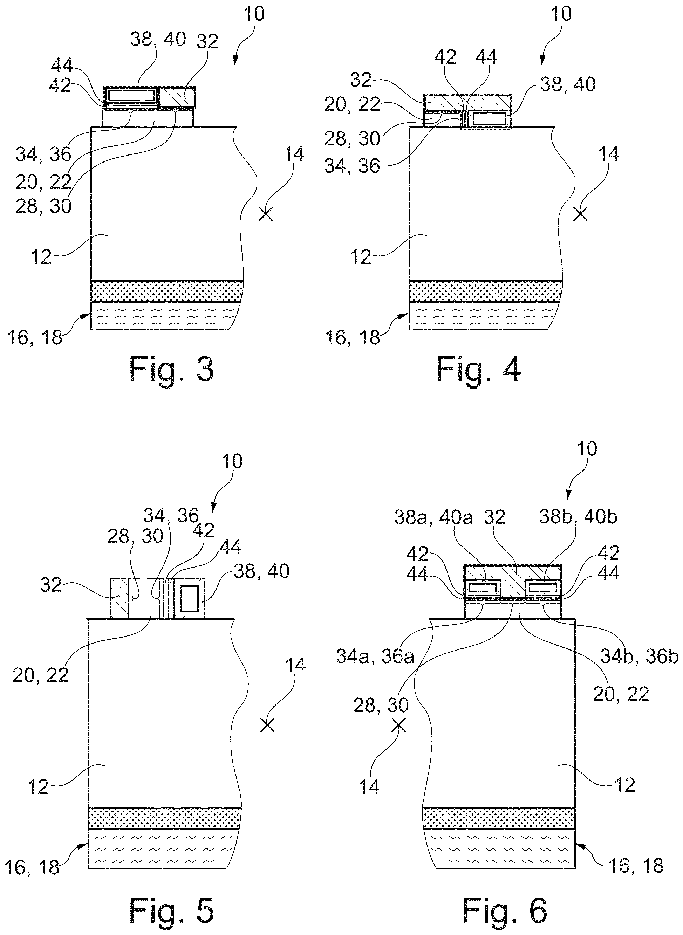

Figure 3 shows an alternative battery assembly 10. For the ease of representation, only the surroundings of one cell terminal, which can be a first cell terminal 20 or a second cell terminal 22, are represented.

In the following, only the differences with respect to the example of Figures 1 and 2 will be explained.

As before, the electric connection surface 28, 30and the thermal connection surface 34, 36 of the cell terminal 20, 22 are arranged on the same side of the cell terminal 20, 22.

However, in contrast to the example of Figures 1 and 2, now the thermal connection surface 34, 36 is arranged closer to an end of the upper side of the respective electric battery cell 12 than the electric connection surface 28, 30. In other words, the order of the electric connection surface 28, 30 and the associated thermal connection surface 34, 36 is inversed.

Figure 4 shows a further alternative battery assembly 10. Again, for the ease of representation, only the surroundings of one cell terminal are represented. The cell terminal can be a first cell terminal 20 or a second cell terminal 22.

In the example of Figure 4, the cell terminal 20, 22 is pin-shaped.

The electric connection surface 28, 30 is arranged on an upper surface of the cell terminal 20, 22.

The thermal connection surface 34, 36 is arranged on a side which is adjacent to the side on which the electric connection surface 28, 30 is positioned.

In the example of Figure 4, the thermal connection surface 34, 36 is positioned on a lateral side of the cell terminal 20, 22.

This has the effect that in a situation in which the electric conductor 32 is connected to the electric connection surface 28, 30 and the coolant channel 38, 40 is thermally coupled to the thermal connection surface 34, 36, the coolant channel 38, 40 is arranged between the electric conductor 32 and the electric battery cell 12.

Figure 5 shows a further alternative battery assembly 10. Again, for the ease of representation, only the surroundings of one cell terminal are represented. The cell terminal can be a first cell terminal 20 or a second cell terminal 22.

In contrast to the previous examples, now the electric connection surface 28, 30 and the thermal connection surface 34, 36 are arranged on opposite sides of the respective cell terminal 20, 22.

Figure 6 shows another alternative battery assembly 10. Again, for the ease of representation, only the surroundings of one cell terminal are represented. The cell terminal can be a first cell terminal 20 or a second cell terminal 22.

The example of Figure 6 is similar to the example of Figures 1 and 2 and the example of Figure 3. This means that again, the electric connection surface 28, 30 and the thermal connection surface 34, 36 are arranged on the same side of the cell terminal 20, 22. As before, the cell terminal can be a first cell terminal 20 or a second cell terminal 22.

However, in contrast to the above examples, in the example of Figure 6 two thermal connection surfaces 34a, 34b, 36a, 36b are provided on the cell terminal 20, 22. The thermal connection surface 34a, 36a and the thermal connection surface 34b, 36b are separate from one another. Furthermore, separate coolant channels 38a, 40a and 38b, 40b are provided. They are thermally coupled to the separate thermal connection surface 34a, 36a and 34b, 36b respectively.

The electric connection surface 28, 30 is arranged between the thermal connection surface 34a, 36a and the thermal connection surface 34b, 36b.

Moreover, in the example of Figure 6, an electric conductor 32 having a T-shaped cross-section is used. This electric conductor 32 contacts the electric connection surface 28, 30 with the foot of the T-shaped cross-section. The upper part of the electric conductor 32 covers the coolant channel 38a, 40a and the coolant channel 38b, 40b.

In all the examples shown in Figures 3, 4 and 6, the electric conductor 32 and the coolant channels 38, 40 are formed integrally. This means that the coolant channel and the electric conductor 32 are portions of the same part. This is illustrated using dashed lines.

Any reference signs in the claims should not be construed as limiting the scope of the claims.

### LIST OF REFERENCE SIGNS

- 10: battery assembly
- 10a: first end
- 10b: second end
- 12: electric battery cell
- 14: line-up direction
- 16: cooling means
- 18: cooling plate
- 18a: coolant port
- 20: first cell terminal
- 22: second cell terminal
- 24: first electrode
- 26: second electrode
- 28: electric connection surface of the first cell terminal
- 30: electric connection surface of the second cell terminal
- 32: electric conductor
- 34: thermal connection surface of the first cell terminal
- 34a: thermal connection surface of the first cell terminal
- 34b: thermal connection surface of the first cell terminal
- 36: thermal connection surface of the second cell terminal
- 36a: thermal connection surface of the second cell terminal
- 36b: thermal connection surface of the second cell terminal
- 38: coolant channel
- 38a: coolant channel
- 38b: coolant channel
- 40: coolant channel
- 40a: coolant channel
- 40b: coolant channel
- 42: thermal interface material
- 44: ceramic spacer part

## Claims

1. An electric battery cell (12) for a battery assembly (10), the electric battery cell (12) comprising at least a first electrode (24) being electrically connected to a first cell terminal (20) and a second electrode (26) being electrically connected to a second cell terminal (22),
wherein each of the first cell terminal (20) and the second cell terminal (22) comprises an electric connection surface (28, 30) for electrically connecting the respective first cell terminal (20) or second cell terminal (22),
**characterized in that** at least one of the first cell terminal (20) and the second cell terminal (22) comprises a thermal connection surface (34, 36) being separate from the respective electric connection surface (28, 30), wherein the thermal connection surface (34, 36) is configured to transfer heat, and
wherein the electric connection surface (28, 30) and the thermal connection surface (34, 36) of at least one of the first cell terminal (20) and the second cell terminal (22) are arranged on adjacent or opposite sides of the respective first cell terminal (20) or second cell terminal (22).

2. The electric battery cell (12) of claim 1, wherein each of the first cell terminal (20) and the second cell terminal (22) comprises a thermal connection surface (34, 36) being configured to transfer heat.

3. The electric battery cell (12) of claim 1 or claim 2, wherein at least one of the first cell terminal (20) and the second cell terminal (22) comprises two or more thermal connection surfaces (34, 36) being separate from one another.

4. The electric battery cell (12) according to any one of claims 1 to 3, wherein a thermal interface material (42) is arranged on at least one thermal connection surface (34, 36), wherein a thermal conductivity of the thermal interface material (42) exceeds the thermal conductivity of the first cell terminal (20) or the second cell terminal (22) comprising the thermal connection surface (34, 36) on which the thermal interface material (42) is arranged.

5. The electric battery cell (12) according to any one of claims 1 to 4, wherein a ceramic spacer part (44) is positioned on at least one thermal connection surface (34, 36), wherein an electric conductivity of the first cell terminal (20) or the second cell terminal (22) on which the ceramic spacer part (44) is positioned is at least double the electric conductivity of the ceramic spacer part (44).

6. The electric battery cell (12) of claim 5, wherein the ceramic spacer part (44) comprises an aluminum nitride material or a silicon nitride material.

7. A battery assembly (10) comprising
at least one electric battery cell (12) according to any one of claims 1 to 6, and
at least one coolant channel (38, 40) being configured to guide a coolant,
wherein the coolant channel (38, 40) is thermally coupled to the thermal connection surface (34, 36) of the at least one electric battery cell (12).

8. The battery assembly (10) of claim 7, wherein the coolant channel (38, 40) is made from a plastic material.

9. The battery assembly (10) of claim 7 or 8, comprising at least two electric battery cells (12), wherein the coolant channel (38, 40) is thermally coupled to the thermal connection surfaces (34, 36) of all of the at least two electric battery cells (12).

10. The battery assembly (10) of claim 9, wherein the at least two electric battery cells (12) are electrically connected by an electric conductor (32) electrically connecting an electric connection surface (28, 30) of each of the at least two electric battery cells (12), wherein the electric conductor (32) and the coolant channel (38, 40) are formed integrally.

11. The battery assembly (10) of any one of claims 7 to 10, further comprising a cooling means (16) being arranged on a side adjacent or opposite to the side of the at least one electric battery cell (12) carrying the respective first electric cell terminal (20) and second electric cell terminal (22).

12. A vehicle comprising a battery assembly (10) according to any one of claims 7 to 11.

## Patentansprüche

1. Elektrische Batteriezelle (12) für eine Batterieanordnung (10), wobei die elektrische Batteriezelle (12) mindestens eine erste Elektrode (24), die elektrisch mit einem ersten Zellenanschluss (20) verbunden ist, und eine zweite Elektrode (26), die elektrisch mit einem zweiten Zellenanschluss (22) verbunden ist, umfasst,
wobei sowohl der erste Zellenanschluss (20) als auch der zweite Zellenanschluss (22) eine elektrische Verbindungsfläche (28, 30) zum elektrischen Verbinden des jeweiligen ersten Zellenanschlusses (20) oder zweiten Zellenanschlusses (22) umfasst,
**dadurch gekennzeichnet, dass** der erste Zellenanschluss (20) und/oder der zweite Zellenanschluss (22) eine thermische Verbindungsfläche (34, 36) umfasst, die von der jeweiligen elektrischen Verbindungsfläche (28, 30) getrennt ist, wobei die thermische Verbindungsfläche (34, 36) eingerichtet ist, um Wärme zu übertragen, und
wobei die elektrische Verbindungsfläche (28, 30) und die thermische Verbindungsfläche (34, 36) von dem ersten Zellenanschluss (20) und/oder dem zweiten Zellenanschluss (22) auf benachbarten oder gegenüberliegenden Seiten des jeweiligen ersten Zellenanschlusses (20) oder zweiten Zellenanschlusses (22) angeordnet sind.

2. Elektrische Batteriezelle (12) nach Anspruch 1, wobei sowohl der erste Zellenanschluss (20) als auch der zweite Zellenanschluss (22) eine thermische Verbindungsfläche (34, 36) umfasst, die eingerichtet ist, um Wärme zu übertragen.

3. Elektrische Batteriezelle (12) nach Anspruch 1 oder Anspruch 2, wobei der erste Zellenanschluss (20) und/oder der zweite Zellenanschluss (22) mindestens zwei oder mehr thermische Verbindungsflächen (34, 36) umfasst, die voneinander getrennt sind.

4. Elektrische Batteriezelle (12) nach einem der Ansprüche 1 bis 3, wobei ein thermisches Schnittstellenmaterial (42) auf mindestens einer thermischen Verbindungsfläche (34, 36) angeordnet ist, wobei eine thermische Leitfähigkeit des thermischen Schnittstellenmaterials (42) die thermische Leitfähigkeit des ersten Zellenanschlusses (20) oder des zweiten Zellenanschlusses (22) übersteigt, der die thermische Verbindungsfläche (34, 36) umfasst, auf der das thermische Schnittstellenmaterial (42) angeordnet ist.

5. Elektrische Batteriezelle (12) nach einem der Ansprüche 1 bis 4, wobei ein keramisches Abstandshalterteil (44) auf mindestens einer thermischen Verbindungsfläche (34, 36) positioniert ist, wobei eine elektrische Leitfähigkeit des ersten Zellenanschlusses (20) oder des zweiten Zellenanschlusses (22), auf dem das keramische Abstandshalterteil (44) positioniert ist, mindestens das Doppelte der elektrischen Leitfähigkeit des keramischen Abstandshalterteils (44) beträgt.

6. Elektrische Batteriezelle (12) nach Anspruch 5, wobei das keramische Abstandshalterteil (44) ein Aluminiumnitridmaterial oder ein Siliziumnitridmaterial umfasst.

7. Batterieanordnung (10), umfassend
mindestens eine elektrische Batteriezelle (12) nach einem der Ansprüche 1 bis 6 und
mindestens einen Kühlmittelkanal (38, 40), der eingerichtet ist, um ein Kühlmittel zu führen,
wobei der Kühlmittelkanal (38, 40) thermisch mit der thermischen Verbindungsfläche (34, 36) der mindestens einen elektrischen Batteriezelle (12) verbunden ist.

8. Batterieanordnung (10) nach Anspruch 7, wobei der Kühlmittelkanal (38, 40) aus einem Kunststoffmaterial hergestellt ist.

9. Batterieanordnung (10) nach Anspruch 7 oder 8, umfassend mindestens zwei elektrische Batteriezellen (12), wobei der Kühlmittelkanal (38, 40) thermisch mit den thermischen Verbindungsflächen (34, 36) sämtlicher der mindestens zwei elektrischen Batteriezellen (12) verbunden ist.

10. Batterieanordnung (10) nach Anspruch 9, wobei die mindestens zwei elektrischen Batteriezellen (12) durch einen elektrischen Leiter (32) elektrisch verbunden sind, der eine elektrische Verbindungsfläche (28, 30) von jeder der mindestens zwei elektrischen Batteriezellen (12) elektrisch verbindet, wobei der elektrische Leiter (32) und der Kühlmittelkanal (38, 40) einstückig gebildet sind.

11. Batterieanordnung (10) nach einem der Ansprüche 7 bis 10, ferner umfassend ein Kühlmittel (16), das auf einer Seite angeordnet ist, die der Seite der mindestens einen elektrischen Batteriezelle (12) benachbart ist oder gegenüberliegt, die den jeweiligen ersten elektrischen Zellenanschluss (20) und zweiten elektrischen Zellenanschluss (22) trägt.

12. Fahrzeug, umfassend eine Batterieanordnung (10) nach einem der Ansprüche 7 bis 11.

## Revendications

1. Élément de batterie électrique (12) destiné à un ensemble batterie (10), l'élément de batterie électrique (12) comprenant au moins une première électrode (24) qui est connectée électriquement à une première borne d'élément (20) et une seconde électrode (26) qui est connectée électriquement à une seconde borne d'élément (22),
dans lequel chacune de la première borne d'élément (20) et de la seconde borne d'élément (22) comprend une surface de connexion électrique (28, 30) destinée à la connexion électrique de la première borne d'élément (20) ou la seconde borne d'élément (22) respective,
**caractérisé en ce que** au moins une de la première borne d'élément (20) et de la seconde borne d'élément (22) comprend une surface de connexion thermique (34, 36) qui est séparée de la surface de connexion électrique (28, 30) respective, la surface de connexion thermique (34, 36) étant conçue pour transférer de la chaleur, et
dans lequel la surface de connexion électrique (28, 30) et la surface de connexion thermique (34, 36) d'au moins une de la première borne d'élément (20) et de la seconde borne d'élément (22) sont agencées sur des côtés adjacents ou opposés de la première borne d'élément (20) ou la seconde borne d'élément (22) respective.

2. Élément de batterie électrique (12) selon la revendication 1, dans lequel chacune de la première borne d'élément (20) et de la seconde borne d'élément (22) comprend une surface de connexion thermique (34, 36) qui est conçue pour transférer de la chaleur.

3. Élément de batterie électrique (12) selon la revendication 1 ou la revendication 2, dans lequel au moins une de la première borne d'élément (20) et de la seconde borne d'élément (22) comprend deux surfaces de connexion thermique (34, 36) ou plus, qui sont séparées les unes des autres.

4. Élément de batterie électrique (12) selon l'une quelconque des revendications 1 à 3, dans lequel un matériau d'interface thermique (42) est agencé sur au moins une surface de connexion thermique (34, 36), une conductivité thermique du matériau d'interface thermique (42) dépassant la conductivité thermique de la première borne d'élément (20) ou de la seconde borne d'élément (22) comprenant la surface de connexion thermique (34, 36) sur laquelle le matériau d'interface thermique (42) est agencé.

5. Élément de batterie électrique (12) selon l'une quelconque des revendications 1 à 4, dans lequel une pièce d'écartement en céramique (44) est positionnée sur au moins une surface de connexion thermique (34, 36), une conductivité électrique de la première borne d'élément (20) ou de la seconde borne d'élément (22) sur laquelle la pièce d'écartement en céramique (44) est positionnée étant au moins égale au double de la conductivité électrique de la pièce d'écartement en céramique (44).

6. Élément de batterie électrique (12) selon la revendication 5, dans lequel la pièce d'écartement en céramique (44) comprend un matériau à base de nitrure d'aluminium ou un matériau à base de nitrure de silicium.

7. Ensemble batterie (10) comprenant
au moins un élément de batterie électrique (12) selon l'une quelconque des revendications 1 à 6, et au moins un canal de refroidissement (38, 40) qui est conçu pour guider un liquide de refroidissement, le canal de refroidissement (38, 40) étant couplé thermiquement à la surface de connexion thermique (34, 36) de l'au moins un élément de batterie électrique (12).

8. Ensemble batterie (10) selon la revendication 7, dans lequel le canal de refroidissement (38, 40) est en matière plastique.

9. Ensemble batterie (10) selon la revendication 7 ou 8, comprenant au moins deux éléments de batterie électrique (12), le canal de refroidissement (38, 40) étant couplé thermiquement aux surfaces de connexion thermique (34, 36) de la totalité des au moins deux éléments de batterie électrique (12).

10. Ensemble batterie (10) selon la revendication 9, dans lequel les au moins deux éléments de batterie électrique (12) sont électriquement connectés par un conducteur électrique (32) connectant électriquement une surface de connexion électrique (28, 30) de chacun des au moins deux éléments de batterie électrique (12), le conducteur électrique (32) et le canal de refroidissement (38, 40) étant formés d'un seul tenant.

11. Ensemble batterie (10) selon l'une quelconque des revendications 7 à 10, comprenant en outre un moyen de refroidissement (16) qui est agencé sur un côté adjacent ou opposé au côté de l'au moins un élément de batterie électrique (12) portant la première borne d'élément électrique (20) et la seconde borne d'élément électrique (22) respective.

12. Véhicule comprenant un ensemble batterie (10) selon l'une quelconque des revendications 7 à 11.
